# EUROPEAN PATENT SPECIFICATION

(11) **EP 3 541 888 B1**
(45) Date of publication and mention of the grant of the patent: **24.12.2025**
(21) Application number: 17871871.4
(22) Date of filing: 09.11.2017
(51) Int. Cl.: C09K 3/14, B24D 3/06, B24D 18/00, B24D 3/08, B24D 3/34

(54) **METAL HYBRID GRINDING WHEEL WITH COATED FILLER PARTICLES**
HYBRIDE METALLSCHLEIFSCHEIBE MIT BESCHICHTETEN FÜLLSTOFFTEILCHEN
MEULE HYBRIDE MÉTALLIQUE PRÉSENTANT DES PARTICULES DE CHARGE REVÊTUES

(30) Priority: 18.11.2016 US 201662423846 P
(43) Date of publication of application: 25.09.2019
(73) Proprietor: 3M Innovative Properties Company, Saint Paul, Minnesota 55133-3427 (US)
(72) Inventor: HAJDUK, Janusz, Saint Paul, Minnesota 55133-3427 (US); GOERS, Brian D., Saint Paul, Minnesota 55133-3427 (US); HUPPERTZ, Richard, D-41453 Neuss (DE); VEERARAGHAVAN, Badri, Saint Paul, Minnesota 55133-3427 (US)
(74) Representative: Vossius & Partner Patentanwälte Rechtsanwälte mbB
(86) International application number: PCT/US2017/060816
(87) International publication number: WO 2018/093656

(56) References cited:
- EP-B1- 1 709 136
- CA-A1- 2 327 634
- US-A- 3 402 035
- US-A- 3 402 035
- US-A- 3 984 214
- US-A- 3 984 214
- US-A- 4 334 895
- US-A1- 2015 027 062
- US-A1- 2015 027 062
- US-A1- 2015 273 599
- US-A1- 2015 290 771

## Description

### BACKGROUND

One measure of the performance of an abrasive article is the integrity of the bonds formed the components that form the abrasive article. If the bonds are too weak, then the abrasive article can be prone to premature failure. However, given the different types of components that can be found in the abrasive article, it can be difficult to ensure good bonding throughout the article. US 3,402,035 concerns an abrasive wheel comprising *inter alia* graphite particles having a metallic coating thereabout.

### SUMMARY OF THE DISCLOSURE

The present invention provides an abrasive article as defined in claim 1. Certain embodiments of the abrasive article are set forth in claims 2 to 12.

According to various embodiments, the abrasive article is a wheel. A substrate is contacted with the wheel and the wheel is rotated with respect to the substrate.

The present invention further provides a method of forming an abrasive article as defined in claim 13.

The abrasive article of the disclosure includes various advantages, some of which are unexpected. For example, according to some embodiments of the present disclosure, the bond between the filler particles of the filler particle component and the metal matrix component is increased in strength compared to a corresponding article that does not include the at least partially coated filler particle component. According to some embodiments of the present disclosure, during operation of the abrasive article, less power is consumed when using the article to produce a total cut of produce a total cut of 8 mm³/mm/sec compared to production of the same total cut under the same conditions using a corresponding abrasive article having less or none of the at least partially coated filler particle component. In various embodiments, due to at least the higher strength of the bond structure, a larger amount of filler particles can be incorporated into the bond structure, resulting in a more free cutting structure that utilizes less power in the grinding operation. In various embodiments, when utilizing lower amounts of coated filler particles, a stronger structure can be created resulting in a structure that retains its form longer and also has lower power requirements during cutting as compared to an abrasive article with equivalent amounts of uncoated filler particles.

### BRIEF DESCRIPTION OF THE FIGURES

In the drawings, which are not necessarily drawn to scale, like numerals describe substantially similar components throughout the several views. The drawings illustrate generally, by way of example, but not by way of limitation, various embodiments discussed in the present document.
FIG. 1 is shows a grinding wheel, in accordance with various embodiments.
FIG. 2 is a sectional view of a portion of the grinding wheel, in accordance with various embodiments.

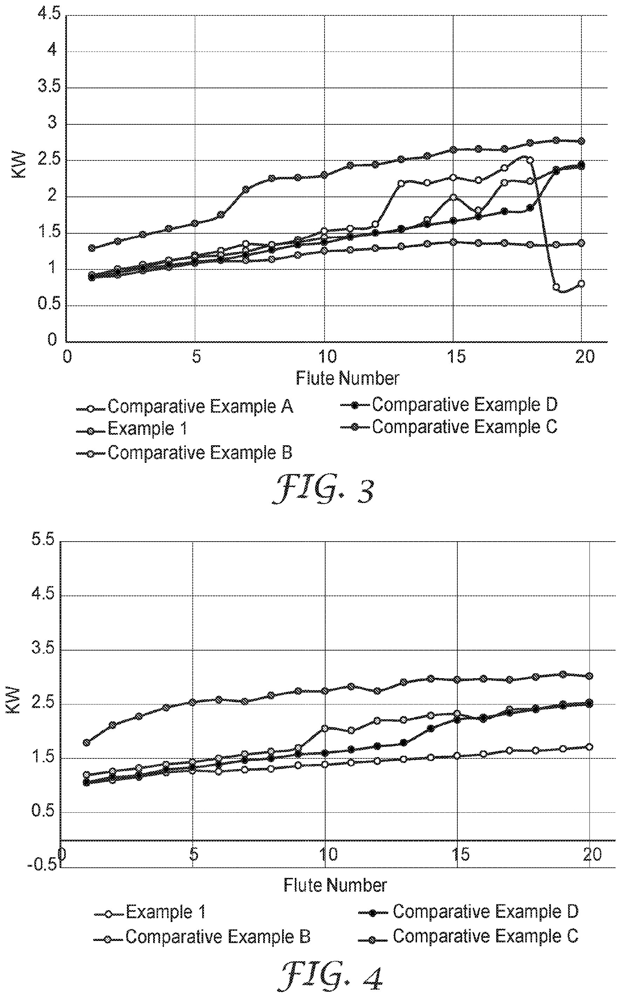

FIG. 3 is a graph showing a power profile of various abrasive articles with the spindle power shown on the y-axis in KW.
FIG. 4 is another graph showing a power profile of various abrasive articles with the spindle power shown on the y-axis in KW.

### DETAILED DESCRIPTION OF THE INVENTION

The invention is defined in the appended claims.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading can occur within or outside of that particular section

The term "about" as used herein can allow for a degree of variability in a value or range, for example, within 10%, within 5%, or within 1% of a stated value or of a stated limit of a range, and includes the exact stated value or range.

The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%.

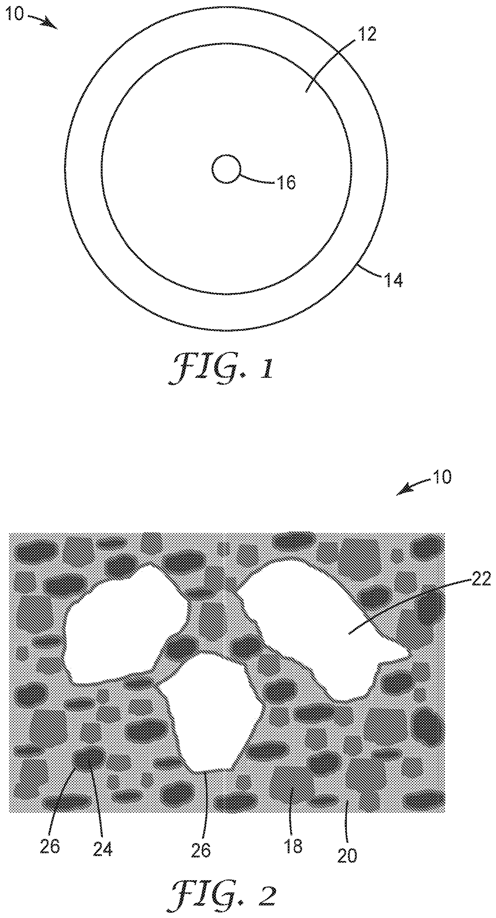

FIGs. 1 and 2, show grinding wheel 10. In some applications, grinding wheel 10 can be used for machining hard and/or brittle materials such as tungsten carbide. Such materials can be present in work pieces for tools such as for example drills or milling tools.

As shown in FIG. 1, grinding wheel 10 includes core 12 and abrasive article 14. As discussed herein, abrasive article 14 can be formed form abrasive particles and filler particles disposed in a metallic matrix and a resin. Abrasive article 14 forms a rim circumscribing core 12. Core 12 can be made of a less abrasive, or in some circumstances, less expensive material such as steel or some other metal. Alternatively, core 12 can be made of, for example, a polymeric material. Core 12 can also include more than one material. For example, core 12 can be made partially of metal such as steel or aluminum and partially of a polymeric material. Core 12 can give structural support to abrasive article 14. Core 12 can be provided with through-hole or cavity 16 such that grinding wheel 10 can be mounted on a spindle (not shown) for rotary movement.

FIG. 2 shows a sectional view of abrasive article 14. As shown, abrasive article 14 includes a metallic matrix component that includes metallic members such as bronze particles 18 and alloy 20. The metallic matrix component can act as a bonding agent that holds the abrasive particle component and the filler particle component together. The metallic matrix component can also include a polymeric bonding agent that can include a polyimide. Abrasive article 14 further includes an abrasive particle component, which includes abrasive particles 22 embedded within the metallic matrix component. Abrasive article 14 further includes a filler particle component which includes filler particles 24 embedded within the metallic matrix component. Abrasive particles 22 have a higher hardness than filler particles 24. As shown, filler particles 24 are at least partially coated by first metallic layer 26 and by second metallic layer, the second metallic layer comprising a second metal different from a first metal of the first metallic layer.

Each component accounts for a different volume percent (vol%) and weight percent (wt%) of abrasive article 14. For example, the metallic matrix component can range from about 10 wt% to about 50 wt% of abrasive article 14, or from about 20 wt% to about 40 wt% of abrasive article 14, or less than, equal to, or greater than 15 wt%, 20, 25, 30, 35, 40, 45 wt% of abrasive article 14. Additionally, the metallic matrix component can range from about 40 vol% to about 90 vol% of abrasive article 14, or from about 50 vol% to about 80 vol% of abrasive article 14, or less than about, equal to about, or greater than about, 40 vol%, 45, 50, 55, 60, 65, 70, 75, 80, or 85 vol% of abrasive article 14.

As shown in FIG. 2, the metallic matrix component includes a plurality of metallic particles. On average, a hardness of about 50 wt% to about 100 wt%, or 90 wt% to about 100 wt%, or less than, equal to, or greater than 55 wt%, 60, 65, 70, 75, 80, 85, 90, or 95 wt% of the metallic particles is lower than the hardness of the abrasive particle component. In some examples the hardness of the individual metallic particles ranges from about 2 Mohs hardness to about 8 Mohs hardness, or from about 4 Mohs hardness to about 6 Mohs hardness, or less than, equal to, or greater than 3 Mohs hardness, 4, 5, 6, or 7 Mohs hardness.

The individual metallic particles can include one or more different metals, alloys, or combinations thereof. For example, the metallic particles of the metallic matrix component can include elemental tin, elemental silver, elemental copper, bronze, alloys thereof, or mixtures thereof.

In some examples, the metallic particles are 100 wt% bronze. In other examples the metallic particles can include other metals such that bronze ranges from about 10 wt% to about 50 wt% of abrasive article 14, or from about 20 wt% to about 30 wt% of abrasive article 14, or less than, equal to, or greater than 15 wt%, 20, 25, 30, 35, 40, or 45 wt% of abrasive article 14. In terms of the weight percent of the abrasive article 14, the bronze can range from about 10 vol% to about 40 vol%, or from about 20 vol% to about 50 vol% of abrasive article 14, or less than, equal to, or greater than 15 vol%, 20, 25, 30, or 35 vol% of abrasive article 14. The bronze can include one or more of various different grades of bonze. Examples of suitable grades of bronze include 50/50 bronze, 40/60 bronze, and 60/40 bronze.

In addition to bronze, other metals that can be included in the metallic matrix include an alloy of elemental silver, elemental copper, and elemental tin. The alloy can be used in conjunction with another metal such as bronze to form the metallic matrix component. The alloy can also be used alone so that it accounts for 100% of the metallic matrix component. The alloy can range from about 10 wt% to about 50 wt% of abrasive article 14 or from about 20 wt% to about 50 wt% of abrasive article 14, or from about 15 wt%, 20, 25, 30, 35, 40, or 55 wt% of abrasive article 14. Additionally, the alloy can range from about 10 vol% to about 50 vol% of abrasive article 14or from about 20 vol% to about 40 vol%, or less than, equal to, or greater than 15 vol%, 20, 25, 30, 35, 40, or 45 vol% of abrasive article 14.

The respective amounts of elemental silver, elemental copper, and elemental tin within the alloy can be selected from various amounts. For example the elemental silver can range from about 1 wt% to about 20 wt% of the alloy, or from about 5 wt% to about 15 wt% of the alloy, or less than, equal to, or greater than 5 wt%, 10, or 15 wt% of the alloy. The elemental copper can range from about 30 wt% to about 60 wt% of the alloy, or about 40 wt% to about 50 wt% of the alloy, or less than, equal to, or greater than 35 wt%, 40, 45, 50, or 55 wt% of the alloy. The elemental tin can range from about 30 wt% to about 60 wt% of the alloy, or from about 40 wt% to about 50 wt% of the alloy, or less than, equal to, or greater than 35 wt%, 40, 45, 50, or 55 wt% of the alloy. In some examples, the alloy is 10 wt% elemental silver, 45 wt% elemental copper, and 45 % elemental tin.

The metallic matrix component can further include a polymeric bonding agent that is mixed together with the metal particles such that the polymeric bonding agent and the metal particles form a connected network The use of a polymeric agent can allow fine tuning of the properties of the metallic matrix to adapt it to different kinds of abrasive particles. In some examples, the polymeric bonding agent can be a polyimide or a composition including a polyimide. One benefit of using polyimide is that it heat resistant and can withstand the high temperatures during formation of the abrasive article.

The filler particle component is dispersed within the metal matrix component. The filler particle component can have lubricating properties that can aid with grinding. For example, the filler particle component can facilitate better contact with a substrate, which can lower the power draw of a device using the abrasive article. The filler particle component can range from about 5 vol% to about 40 vol% of abrasive article 14, or from about 15 vol% to about 30 vol% of abrasive article 14, or less than, equal to, or greater than 10 vol%, 15, 20, 25, 30, or 35 vol% of abrasive article 14. Additionally, the filler particle component can range from about 2 wt% to about 20 wt% of abrasive article 14, or from about 5 wt% to about 10 wt% of abrasive article 14, or less than, equal to, or greater than 5 wt%, 10, or 15 wt% of abrasive article 14. The filler particle component can include a plurality of filler particles 24. On average, a hardness of the each of filler particles 24 is less than those of the abrasive particle component. For example, the hardness of filler particles 24, on average, can range from about 0.5 Mohs hardness to about 8 Mohs hardness, or from about 0.5 Mohs hardness to about 4 Mohs hardness, or about 1 Mohs hardness, 2, 3, 4, 5, 6, or 7 Mohs hardness. Examples of suitable filler particles 24 include graphite particles, boron nitride particles (e.g., hexagonal boron nitride particles), glass particles, silicon nitride particles, binder coke particles, or mixtures thereof.

In some examples of abrasive article 14, the filler particle component is mostly formed from graphite particles. For example about 50 wt% to about 100 wt%, or about 90 wt% to about 100 wt%, or less than, equal to, or greater than 55 wt%, 60, 65, 70, 75, 80, 85, 90, or 95 wt% of filler particles 24 are graphite particles.

Graphite, along, with other filler particles is a good lubrication agent. Good adhesion between the filler particles 24 and the metallic matrix component can facilitate adequate performance of the abrasive article. A potential problem, however, is that as filler particles 24 are mixed with the metallic matrix component and the abrasive particle component, the bond between filler particles 24 and the matrix component can be weakened. For example, graphite filler particles can smear when they contact the abrasive particle component or the metallic matrix component. The smearing of graphite can weaken adhesion between the components of abrasive article 14. However, at least partially coating filler particles 24 with first metallic layer 26 can promote good adhesion with the metallic matrix component, while substantially preventing smearing.

The extent to which filler particles 24 of the portion of the filler particle component are coated can be selected from numerous values, both in terms of the extent that each filler particle 24 is coated and in terms of the number of filler particles 24 that are coated. For example about 20 wt% to about 100 wt% or about 50 wt% to about 100 wt%, or about 25 wt%, 30, 35, 40, 45, 50, 55, 60, 65, 70, 75, 80, 85, 90, or 95 wt% of filler particles 24 can be at least partially coated. Of those coated filler particles 24, about 20% to about 100%, or about 80% to about 100%, or less than, equal to, or greater than 25%, 30, 35, 40, 45, 50, 55, 60, 65, 70, 75, 80, 85, 90, or 95% of a surface area of those filler particles 24 of the portion of the filler particle component is coated by first metallic layer 26.

First metallic layer 26 can range from about 0.1 wt% to about 40 wt% of the filler particle component, or about 1 wt% to about 10 wt%, or less than, equal to, or greater than 0.5 wt%, 1, 5, 10, 15, 20, 25, 30, or 35 wt%. According to the present invention, a thickness of first metallic layer 26 ranges from about 0.1 micron to about microns.

First metallic layer 26 can be a continuous layer. This is shown in FIG. 2, where first metallic layer 26 is completely connected. Alternatively, first metallic layer 26 can be a discontinuous layer. For example first metallic layer 26 can be formed from a number of patches or globs dispersed along filler particle 24.

First metallic layer 26 includes at least one metal. The one or more metals can range from about 70 wt% to about 100 wt% of first metallic layer 26, or from about 90 wt% to about 100 wt%, less than, equal to, or greater than 75 wt%, 80, 85, 90, or 95 wt%. The at least one metal can be any suitable metal, such as elemental copper, elemental tin, elemental silver, bronze, elemental chromium, elemental titanium, or an alloy thereof. Factors that drive the decision on which metal or alloy to use can include the strength of the bond formed between first metallic layer 26 and the metallic matrix component. Additionally, a specific metal can be selected because it has a hardness that is less than that of the abrasive particle component. According to some examples, first metallic layer 26 is substantially free of elemental nickel, an alloy thereof, or a combination thereof.

According to the present invention, a second metallic layer at least partially coats the filler particle component. The second metallic layer can coat filler particles 24 that are already at least partially coated by first metallic layer 26. That is, the second metallic layer can essentially coat first metallic layer 26 or an uncoated portion of filler particles 24 that are at least partially coated. The second metallic layer can coat filler particles 24 that are not already coated by first metallic layer 26. The second metallic layer can share many of the characteristics of first metallic layer 26 including the thickness of the layer and the weight percent it accounts for in each filler particle 24. Additionally, the second metallic layer can include any metal or alloy described herein as suitable for the first metallic layer 26. The second metallic layer comprises a second metal different from the first metal of the first metallic layer.

As shown in FIG. 2, an interface is formed between at least one of first metallic layer 26, the metallic matrix, and the abrasive particle component. As stated herein, the performance of abrasive article 14 increases when the integrity of the connection between the components increases. Thus, the connection formed at the interface can help to improve the performance of abrasive article 14. In examples of abrasive article 14 that include the second metallic layer, the interface can be formed between at least one of first metallic layer 26, the second metallic layer, the metallic matrix component, and the abrasive particle component.

The abrasive particle component can range from about 10 vol% to about 40 vol% of abrasive article 14, or from about 20 vol% to about 30 vol%, or less than, equal to, or greater than 15 vol%, 20, 25, 30, or 35 vol%. The abrasive particle component can range from about 5 wt% to about 40 wt% of abrasive article 14, or about 10 wt% to about 20 wt%, or less than, equal to, or greater than 10 wt%, 15, 20, 25, 30, or 35 wt%.

The abrasive particle component includes a plurality of abrasive particles 22. On average, the hardness of abrasive particles 22 ranges from about 6 Mohs hardness to about 12 Mohs hardness or from about 7 Mohs hardness to about 9 Mohs hardness, or less than, equal to, or greater than 7 Mohs hardness, 8, 9, 10, or 11 Mohs hardness. Abrasive particles 22 can be selected from any of various suitable abrasive particles, such as diamond particles, cubic boron nitride particles, or a mixture thereof.

The amount of each abrasive particle 22 in the abrasive particle component can be selected from various suitable amounts. For example, about 50 wt% to about 100 wt% of abrasive particles 22 can be diamond particles, or about 90 wt% to about 100 wt%, or less than, equal to, or greater than 55 wt%, 60, 65, 70, 75, 80, 85, 90, or 95 wt%.

As shown in FIG. 2, in some circumstances it can be desirable to coat abrasive particles 22 in a similar manner to filler particles 24 with third metallic layer 28. This can promote better bonding between abrasive particles 22 and metallic matrix component and filler particles 24. The extent to which abrasive particles 22 of the abrasive particle component are coated can be selected from various values, both in terms of the extent that each abrasive particle 22 is coated and in terms of the number of abrasive particles 22 that are coated. For example about 20 wt% to about 100 wt% of each abrasive particle 22 can be at least partially coated, or about 50 wt% to about 100 wt%, or about 25 wt%, 30, 35, 40, 45, 50, 55, 60, 65, 70, 75, 80, 85, 90, or 95 wt%. Of those coated abrasive particles 22, about 20% to about 100% of a surface area of those abrasive particles 22 is coated by third metallic layer 28,or about 80% to about 100%, or less than, equal to, or greater than 25%, 30, 35, 40, 45, 50, 55, 60, 65, 70, 75, 80, 85, 90, or 95%.

Third metallic layer 28 can range from about 1 wt% to about 40 wt%, of the abrasive particle component, or about 1 wt% to about 10 wt%, or less than, equal to, or greater than 5 wt%, 10 , 15, 20, 25, 30, or 35 wt%.. A thickness of third metallic layer 28 can range from about 0.1 microns to about 5 microns, or from about 0.1 micron to about 1 microns, or less than equal to, or greater than 0.5 microns, 1, 1.5, 2, 2.5, 3, 3.5, 4, or 4.5 microns.

The third metallic layer 28 can be a continuous layer. This is shown in FIG. 2, where third metallic layer 28 is completely connected. Alternatively, third metallic layer 28 can be a discontinuous layer. For example third metallic layer 28 can be formed from a number of patches or globs dispersed along abrasive particle 22.

Third metallic layer 28 includes at least one metal. The metal can range from about 70 wt% to about 100 wt% of third metallic layer 28, or from about 90 wt% to about 100 wt%, less than, equal to, or greater than 75 wt%, 80, 85, 90, or 95 wt%. The specific metal can be one of many different metals including elemental copper, elemental tin, elemental silver, bronze, or an alloy thereof. Factors that drive the decision on which metal or alloy to use can include the strength of the bond formed between third metallic layer 28 and metallic matrix component. Additionally, a specific metal can be selected because it has a hardness that is less than that of abrasive particles 22. According to some examples, third metallic layer 28 is substantially free of elemental nickel, an alloy thereof, or a combination thereof.

In some additional examples of abrasive article 14, a fourth metallic layer can at least partially coat the abrasive particle component. The fourth metallic layer can coat abrasive particles 22 that are already at least partially coated by third metallic layer 28. That is, the fourth metallic layer can essentially coat third metallic layer 28 or an uncoated portion of abrasive particles 22 that are at least partially coated. Additionally, the fourth metallic layer can coat abrasive particles 22 that are not already coated by third metallic layer 28. The fourth metallic layer can share many of the characteristics of third metallic layer 28 including the thickness of the layer and the weight percent of each abrasive particle 22. Additionally, the fourth metallic layer can include any metal or alloy of third metallic layer 28. Alternatively, the fourth metallic layer can include at least one metal that is different than the metal of third metallic layer 28.

As shown in FIG. 2, an interface is formed between at least one of third metallic layer 28, the metallic matrix component, and the abrasive particle component. The performance of abrasive article 14 can increase when the integrity of the connection between the components therein increases. Thus, the connection formed at the interface can help to improve the performance of abrasive article 14. In examples of abrasive article 14 that include the fourth metallic layer, the interface can be formed between any combination of first metallic layer 26, the third metallic layer, the metallic matrix, and the filler particle component.

Similar to filler particles 24, an interface between any combination of first metallic layer 26 the second metallic layer, the metallic matrix component, the abrasive particle component, third metallic layer 28 and the fourth metallic layer can be formed. This can result in improved performance in abrasive article 14.

According to various examples, a method of using abrasive article 14 includes contacting a substrate with a wheel including abrasive article 14. The wheel can then be rotated with respect to the substrate. Material is taken away from the substrate as the wheel is rotated. Abrasive article 14 can be well suited for machining hard or brittle materials such as tungsten carbide. Such materials can be present in precursor work pieces for tools, for example, drills or milling tools.

As stated herein materials such as tungsten carbide are hard or brittle. This can increase the amount of power that is consumed by a device incorporating abrasive article 14 However, as shown herein in the Examples, less power is consumed by a device using abrasive article 14 to produce a total cut of 8 mm³/mm/sec compared to production of the same total cut under the same conditions using a corresponding article that has less or none of the at least partially coated filler particle component.

The method of forming abrasive article is as defined in claim 13. Abrasive particles 22 can optionally be coated with third metallic layer 28 or a fourth metallic layer.

After sufficient mixing of the mixture can be deposited within a mold. In some examples, core 12 can be predisposed within the mold so that abrasive article 14 forms around core 12. In examples that do not include core 12, then the mold can be an open structure that the mixture is deposited in, wherein abrasive article 14 can be adhered to a core in a post-modification step.

The mold can be pressed and the temperature of the mold can be increased to about 345 degrees Celsius to about 500 degrees Celsius, or to about 410 degrees Celsius to about 430 degrees Celsius, or less than, equal to, or greater than 410 degrees Celsius, 350, 360, 370, 380, 390, 400, 410, 420 430, 440, 450, 460, 470, 480, or 490 degrees Celsius, and held. The temperature of the mold can then be reduced to a temperature of about 160 degrees Celsius to about 200 degrees Celsius, or about 170 degrees Celsius to about 190 degrees Celsius, or less than, equal to, or greater than 170 degrees Celsius, 180, or 190 degrees Celsius and held. The temperature of the mold can be then reduced to room temperature and abrasive article 14 is removed.

At least partially coating filler particles 24 or abrasive particles 22 can be a preprocessing step that differs from merely adding an uncoated filler particle or uncoated abrasive particle 22 to the metallic matrix component to form abrasive article 14.

One suitable method of coating filler particles 24 or abrasive particles 22 can be coated through precipitation coating. For example, to coat filler particles 24, they can be first exposed to an aqueous solution or slurry containing the metal. This results in a salt containing the metal to be deposited on the surface of filler particles 24. Subsequent heating decomposes the precipitating salt, which leaves behind first metallic layer 26 on the surface of filler particles 24. In other variations, a sol-gel process can be used to initiate the precipitation and deposition process. In all of these method variations, a concentration gradient of precipitation agents, pH, temperature, or other precursor decomposition can be used to obtain a first metallic layer 26 as a coating on filler particles 24.

Spraying (spray drying or spray atomization) of a metal in a molten, solution, or slurry form on to filler particles 24 is another suitable method of achieving a coated filler particle 24. Additionally, electroplating a metal to the surface of filler particles 24 can be another way to coat filler particle 24.

Another suitable method of coating filler particles 24 with the metal can be a plasma vapor method. Plasma vapor coating is used for at least partially coating the filler particle component with the first metallic layer. This method can include growing the coating as a thin film from the vapor phase. In this method, filler particles 24 are exposed to the vapors of the metal under conditions that facilitate the deposition and/or growth of the metal on the surface of filler particle 24. The method places the metal under conditions such that the metal is made volatile, and the volatile metal is exposed to the surface of filler particle 24, where the vaporous metal deposits to form a metal coating.

### Examples

Unless otherwise noted, all parts, percentages, ratios, etc. in the Examples and the rest of the specification are by volume. Unless stated otherwise, all other reagents were obtained, or are available from fine chemical vendors such as Sigma-Aldrich Company, St. Louis, Missouri, or may be synthesized by known methods.

Abbreviations for materials and reagents used in the examples are listed in Table 1.

| **Abbreviation** | **Description** |
|---|---|
| BRO1 | Bronze powder, obtained as SPHERICAL BRONZE 60/40 from Ronald Britton, Lancashire, United Kingdom |
| BRO2 | Bronze powder containing 45% copper, 45% tin and 10% silver, obtained as BRONZE 45/45/10 from Ronald Britton |
| DIA | Resin bond diamond particles, obtained as RB-50 from Worldwide Superabrasives, LLC, Boynton Beach, Florida |
| GRA | Artificial graphite, obtained as A625 from Asbury Graphite Mills, Inc., Asnury, New Jersey |

### EXAMPLE 1

Copper coated graphite particles were prepared using physical vapor deposition with magnetron sputtering. The apparatus used for the preparation of coated graphite particles was disclosed in U. S. Pat. No. 8,698,394 (McCutcheon et al.) and U. S. Pat. No. 7,727,931 (Brey et al.). A tie layer of chromium was first deposited onto graphite particles. A 99.9% pure Chromium target was dc magnetron sputtered for 4 hours at 2 kilowatts at an argon sputtering gas pressure of 10 milli torr onto 1883 grams of GRA particles. The particles were tumbled at 4 resolutions per minute during the coating process. The chamber was backfilled with argon and the chromium target was replaced by a 99.9% pure copper target. Copper was sputtered for 25 hours at 4 kilowatts power at an argon pressure of 10 millitorr. After the copper coating a thin layer of tin was sputtered using a Tin metal target for 4 hours at 1 kilowatt power at the same argon pressure. The density of the coated graphite was 2.606 grams per cubic centimeter and that of the uncoated graphite was 2.263 grams per cubic centimeter. The weight percent of metal was calculated to be 13%.

The metal matrix components BRO1 (90.6 grams), BRO2 (90.4 grams) and the copper coated graphite particles (19.1 grams) were mixed in a ball mill (Rotary Tumbler Base 2-Bar with TL-2 barrel available from C and M Topline, Goleta, California) for 30 minutes to thoroughly mix them together. Upon completion of the mixing process, DIA (31.3 grams) was added to the mixture which was shaken to disperse DIA into the metal matrix particles. A hardened steel mold (101-millimeter outer diameter × 80-millimeter inner diameter, with a 12.2-millimeter thickness) was prepared and the resulting mix was added to the volume and then leveled to evenly spread and distribute the metal matrix / diamond blend to create the grinding wheel rim. The top mold plate was then added and the assembly was then precompacted to a pressure of 61.4 megapascals (4 tons per square inch) The mold was then placed into a heated platen and compacted to a pressure of 122.7 megapascals (8 tons per square inch) at 400 - 435 °C. The mold was held at this temperature and pressure for 5 min then cooled to a temperature of 180 - 235 °C while under pressure. The wheel was then removed from the mold.

The resulting fluting wheels comprised (by volume %) 22.3 parts of DIA, 28.9 parts of BRO1, 28.8 parts of BRO2 and 20.0 parts of copper coated graphite particles.

### COMPARATIVE EXAMPLE A

A metal bonded grinding wheel obtained as STARTEC XP-P+ DC from Tyrolit Schleifmittelwerke Swarovski K.G., Schwaz, Austria.

### COMPARATIVE EXAMPLE B

A grinding wheel obtained as WENDT NAXOFLUTEMAX from 3M Company, Saint Paul, Minnesota.

### COMPARATIVE EXAMPLE C

A hybrid fluting wheel obtained as D320 630HJ from 3M Company, Saint Paul, Minnesota.

### COMPARATIVE EXAMPLE D

A grinding wheel obtained as PARADIGM from Saint Gobain, Courbevoie, France.

### Grinding Test

Each of the sample grinding wheels were trued and dressed off-line before use as follows. The samples were mounted on a steel arbor and balanced. The sample was trued with a silicon carbide wheel of 120 grit, H grade and vitrified bond, commonly used for such processes. The sample was rotated at about 1/10 the surface speed of the silicon carbide wheel that was run at approximately 25.4 meters per second (5000 surface feet per minute) While the sample wheel was rotating, it was trued at 0.0254 millimeters (0.001 inch) depth of cut and 508 millimeters per minute (20 inch per minute) traverse rate until the wheel was considered true. Each sample was also dressed with a silicon carbide wheel of 220 mesh to expose the grit for grinding. Dressing with a 220 mesh white aluminum oxide stick was completed at the beginning of all grinds to start from same reference point.

The wheels were then tested by grinding straight flutes on a 10% Cobalt, Tungsten Carbide rod 101.6 millimeter (0.5-inch diameter and 4-inch) long, obtained from Sandvik, Stockholm, Sweden). The grinding was performed with TX7+ grinder obtained from ANCA Company, Melbourne, Australia. Two test conditions were used. In both conditions, wheel speed was 18 meters per second, depth of cut was 4 millimeters and width of cut was 3.75 millimeters. In Test Condition 1, material removal rate Q'_{w} (an indicative of how many mm³ of material are removed by 1 mm wheel width per second) was 8 mm³/mm/sec, and infeed rate was 120 millimeters per minute. In Test Condition 2, Q'_{w} was set as 10.7 mm³/mm/sec, and infeed rate was 160 millimeters per minute.

The test data obtained under Test Condition 1 is summarized in Table 1 and Figure 1 below.

**TABLE 1**

| **Test Condition 1** | | | | | |
|---|---|---|---|---|---|
| **Wheel** | **COMPARATIVE EXAMPLE A** | **EXAMPLE 1** | **COMPARATIVE EXAMPLE B** | **COMPARATIVE EXAMPLE D** | **COMPARATIVE EXAMPLE C** |
| **Flute #** | **Spindle Power (Kilowatt)** | | | | |
| 1 | 0.90 | 0.89 | 0.92 | 0.89 | 1.28 |
| 2 | 0.96 | 0.92 | 1.00 | 0.96 | 1.47 |
| 3 | 1.04 | 0.98 | 1.06 | 1.02 | 1.68 |
| 4 | 1.12 | 1.03 | 1.13 | 1.06 | 1.89 |
| 5 | 1.19 | 1.09 | 1.17 | 1.11 | 2.03 |
| 6 | 1.26 | 1.12 | 1.20 | 1.14 | 2.08 |
| 7 | 1.35 | 1.12 | 1.25 | 1.20 | 2.25 |
| 8 | 1.34 | 1.14 | 1.34 | 1.27 | 2.30 |
| 9 | 1.41 | 1.20 | 1.38 | 1.34 | 2.35 |
| 10 | 1.53 | 1.25 | 1.44 | 1.37 | 2.44 |
| 11 | 1.57 | 1.27 | 1.46 | 1.45 | 2.40 |
| 12 | 1.63 | 1.29 | 1.51 | 1.50 | 2.51 |
| 13 | 2.18 | 1.31 | 1.55 | 1.56 | 2.51 |
| 14 | 2.19 | 1.35 | 1.68 | 1.62 | 2.54 |
| 15 | 2.27 | 1.38 | 1.99 | 1.67 | 2.59 |
| 16 | 2.23 | 1.36 | 1.81 | 1.73 | 2.53 |
| 17 | 2.40 | 1.36 | 2.20 | 1.80 | 2.61 |
| 18 | 2.50 | 1.34 | 2.22 | 1.85 | 2.59 |
| 19 | 0.76 | 1.34 | 2.37 | 2.35 | 2.55 |
| 20 | 0.80 | 1.36 | 2.42 | 2.45 | 2.62 |

The test data obtained under Test Condition 2 is summarized in Table 2 and Figure 2 below.

**TABLE 2**

| **Test Condition 2** | | | | |
|---|---|---|---|---|
| **Wheel** | **EXAMPLE 1** | **COMPARATIVE EXAMPLE B** | **COMPARATIVE EXAMPLE D** | **COMPARATIVE EXAMPLE C** |
| **Flute #** | **Spindle Power (Kilowatt)** | | | |
| 1 | 1.05 | 1.20 | 1.07 | 1.60 |
| 2 | 1.11 | 1.27 | 1.16 | 1.95 |
| 3 | 1.17 | 1.33 | 1.20 | 2.07 |
| 4 | 1.25 | 1.40 | 1.30 | 2.16 |
| 5 | 1.28 | 1.44 | 1.34 | 2.34 |
| 6 | 1.27 | 1.51 | 1.40 | 2.30 |
| 7 | 1.30 | 1.58 | 1.47 | 2.45 |
| 8 | 1.32 | 1.63 | 1.51 | 2.43 |
| 9 | 1.37 | 1.70 | 1.58 | 2.50 |
| 10 | 1.39 | 2.05 | 1.61 | 2.55 |
| 11 | 1.43 | 2.02 | 1.66 | 2.48 |
| 12 | 1.46 | 2.20 | 1.73 | 2.60 |
| 13 | 1.49 | 2.21 | 1.79 | 2.60 |
| 14 | 1.52 | 2.30 | 2.05 | 2.60 |
| 15 | 1.55 | 2.32 | 2.22 | 2.63 |
| 16 | 1.58 | 2.23 | 2.26 | 2.57 |
| 17 | 1.65 | 2.40 | 2.34 | 2.66 |
| 18 | 1.65 | 2.42 | 2.41 | 2.63 |
| 19 | 1.68 | 2.50 | 2.47 | 2.58 |
| 20 | 1.72 | 2.53 | 2.50 | 2.71 |

Various modifications and alterations of this disclosure may be made by those skilled in the art without departing from the scope of the present invention, as defined by the claims.

## Claims

1. An abrasive article (14) comprising:
a metallic matrix component;
an abrasive particle (22) component dispersed within the metallic matrix component; and
a filler particle (24) component dispersed within the metallic matrix component;
wherein a first portion of the filler particle (24) component is at least partially coated by a first metallic layer (26); and wherein a hardness of the abrasive particle component is greater than a hardness of the filler particle component, wherein a thickness of the first metallic layer (26) is between about 0.1 to about 1 µm; **characterized in that** the at least partially coated portion of the filler particle component is at least partially coated by a second metallic layer, the second metallic layer comprising a second metal different from a first metal of the first metallic layer.

2. The abrasive article (14) of claim 1, wherein the metallic matrix component comprises a plurality of metallic particles.

3. The abrasive article (14) of claim 2, wherein a hardness of about 50 wt% to about 100 wt% of the metallic particles is lower than the hardness of the abrasive particle component.

4. The abrasive article (14) of any one of claims 1-3, wherein the metallic matrix component comprises bronze and an alloy of elemental silver, elemental copper, and elemental tin.

5. The abrasive article (14) of any one of claims 1-4, wherein the filler particle component comprises a plurality of filler particles (24).

6. The abrasive article (14) of claim 5, wherein the filler particles (24) are graphite particles, boron nitride particles, glass particles, silicon nitride particles, binder coke particles, or mixtures thereof.

7. The abrasive article (14) of any one of claims 1-6 wherein the portion of filler particle component that is at least partially coated by the first metallic layer is about 1 wt% to about 100 wt% of the filler particles (24).

8. The abrasive article (14) of any one of claims 1-7, wherein about 20% to about 100% of a surface area of each filler particle (24) of the portion of the filler particle component that is at least partially coated by the first metallic layer is coated by the first metallic layer.

9. The abrasive article (14) of any one of claims 1-8, wherein the first metallic layer comprises a metal.

10. The abrasive article (14) of claim 9, wherein the metal is elemental copper, elemental tin, elemental silver, bronze, or an alloy thereof.

11. The abrasive article (14) of any one of claims 1-10, wherein the abrasive particle component comprises a plurality of abrasive particles (22).

12. The abrasive article (14) of claim 11, wherein the abrasive particles (22) are at least one of diamond particles and cubic boron nitride particles.

13. A method of forming the abrasive article (14) of any one of claims 1-12, comprising:
at least partially coating the filler particle component with the first metallic layer (26) using plasma vapor coating;
at least partially coating the at least partially coated portion of the filler particle component with the second metallic layer, the second metallic layer comprising the second metal different from the first metal of the first metallic layer;
mixing the at least partially coated filler particle component, the metallic matrix, and a resin to form a mixture, wherein the thickness of the first metallic layer (26) of the at least partially coated filler particle component is between about 0.1 to about 1 µm;
adding the abrasive particle component to the mixture and further mixing the mixture; and
contacting the mixture with a mold.

## Patentansprüche

1. Ein Schleifgegenstand (14), aufweisend:
eine metallische Matrixkomponente;
eine Schleifteilchenkomponente (22), die innerhalb der metallischen Matrixkomponente verteilt ist; und
eine Füllstoffteilchenkomponente (24), die innerhalb der metallischen Matrixkomponente verteilt ist;
wobei ein erster Anteil der Füllstoffteilchenkomponente (24) mindestens teilweise durch eine erste metallische Schicht (26) beschichtet ist; und wobei eine Härte der Schleifteilchenkomponente größer als eine Härte der Füllstoffteilchenkomponente ist, wobei eine Dicke der ersten metallischen Schicht (26) zwischen etwa 0,1 und etwa 1 µm liegt; **dadurch gekennzeichnet, dass** der mindestens teilweise beschichtete Anteil der Füllstoffteilchenkomponente mindestens teilweise durch eine zweite metallische Schicht beschichtet ist, die zweite metallische Schicht aufweisend ein zweites Metall, das sich von einem ersten Metall der ersten metallischen Schicht unterscheidet.

2. Der Schleifgegenstand (14) nach Anspruch 1, wobei die metallische Matrixkomponente eine Mehrzahl von metallischen Teilchen aufweist.

3. Der Schleifgegenstand (14) nach Anspruch 2, wobei eine Härte von etwa 50 Gew.-% bis etwa 100 Gew.-% der metallischen Teilchen geringer als die Härte der Schleifteilchenkomponente ist.

4. Der Schleifgegenstand (14) nach einem der Ansprüche 1 bis 3, wobei die metallische Matrixkomponente Bronze und eine Legierung aus elementarem Silber, elementarem Kupfer und elementarem Zinn aufweist.

5. Der Schleifgegenstand (14) nach einem der Ansprüche 1 bis 4, wobei die Füllstoffteilchenkomponente eine Mehrzahl von Füllstoffteilchen (24) aufweist.

6. Der Schleifgegenstand (14) nach Anspruch 5, wobei die Füllstoffteilchen (24) Graphitteilchen, Bornitridteilchen, Glasteilchen, Siliziumnitridteilchen, Bindekoksteilchen oder Mischungen davon sind.

7. Der Schleifgegenstand (14) nach einem der Ansprüche 1 bis 6, wobei der Anteil von Füllstoffteilchenkomponente, der mindestens teilweise durch die erste metallische Schicht beschichtet ist, etwa 1 Gew.-% bis etwa 100 Gew.-% der Füllstoffteilchen (24) beträgt.

8. Der Schleifgegenstand (14) nach einem der Ansprüche 1 bis 7, wobei etwa 20 % bis etwa 100 % eines Oberflächenbereichs jedes Füllstoffteilchens (24) des Anteils der Füllstoffteilchenkomponente, der mindestens teilweise durch die erste metallische Schicht beschichtet ist, durch die erste metallische Schicht beschichtet ist.

9. Der Schleifgegenstand (14) nach einem der Ansprüche 1 bis 8, wobei die erste metallische Schicht ein Metall aufweist.

10. Der Schleifgegenstand (14) nach Anspruch 9, wobei das Metall elementares Kupfer, elementares Zinn, elementares Silber, Bronze oder eine Legierung davon ist.

11. Der Schleifgegenstand (14) nach einem der Ansprüche 1 bis 10, wobei die Schleifteilchenkomponente eine Mehrzahl von Schleifteilchen (22) aufweist.

12. Der Schleifgegenstand (14) nach Anspruch 11, wobei die Schleifteilchen (22) mindestens eines von Diamantteilchen und Teilchen aus kubischem Bornitrid sind.

13. Ein Verfahren zum Bilden des Schleifgegenstands (14) nach einem der Ansprüche 1 bis 12, aufweisend:
mindestens teilweises Beschichten der Füllstoffteilchenkomponente mit der ersten metallischen Schicht (26) unter Verwendung von Plasmadampfbeschichtung;
mindestens teilweises Beschichten des mindestens teilweise beschichteten Anteils der Füllstoffteilchenkomponente mit der zweiten metallischen Schicht, die zweite metallische Schicht aufweisend das zweite Metall, das sich von dem ersten Metall der ersten metallischen Schicht unterscheidet;
Mischen der mindestens teilweise beschichteten Füllstoffteilchenkomponente, der metallischen Matrix und eines Harzes, um eine Mischung zu bilden, wobei die Dicke der ersten metallischen Schicht (26) der mindestens teilweise beschichteten Füllstoffteilchenkomponente zwischen etwa 0,1 und etwa 1 µm liegt;
Hinzufügen der Schleifteilchenkomponente zu der Mischung und weiteres Mischen der Mischung; und
Kontaktieren der Mischung mit einer Form.

## Revendications

1. Article abrasif (14) comprenant :
un composant de matrice métallique ;
un composant d'article abrasif (22)
dispersé dans le composant de matrice métallique ; et
un composant de particule de charge (24) dispersé dans le composant de matrice métallique ;
dans lequel une première partie du composant de particule de charge (24) est au moins partiellement revêtue d'une première couche métallique (26) ; et dans lequel une dureté du composant de particule abrasive est supérieure à une dureté du composant de particule de charge, dans lequel une épaisseur de la première couche métallique (26) est comprise entre environ 0,1 et environ 1 µm ;
**caractérisé en ce que** la partie au moins partiellement revêtue du composant de particule de charge est au moins partiellement revêtue d'une seconde couche métallique, la seconde couche métallique comprenant un second métal différent d'un premier métal de la première couche métallique.

2. Article abrasif (14) selon la revendication 1, dans lequel le composant de matrice métallique comprend une pluralité de particules métalliques.

3. Article abrasif (14) selon la revendication 2, dans lequel une dureté d'environ 50 % en poids à environ 100 % en poids des particules métalliques est inférieure à la dureté du composant de particule abrasive.

4. Article abrasif (14) selon l'une quelconque des revendications 1 à 3, dans lequel le composant de matrice métallique comprend du bronze et un alliage d'argent élémentaire, de cuivre élémentaire et d'étain élémentaire.

5. Article abrasif (14) selon l'une quelconque des revendications 1 à 4, dans lequel le composant de particule de charge comprend une pluralité de particules de charge (24).

6. Article abrasif (14) selon la revendication 5, dans lequel les particules de charge (24) sont des particules de graphite, des particules de nitrure de bore, des particules de verre, des particules de nitrure de silicium, des particules de coke de liant, ou des mélanges de celles-ci.

7. Article abrasif (14) selon l'une quelconque des revendications 1 à 6, dans lequel la partie de composant de particule de charge qui est au moins partiellement revêtue par la première couche métallique représente environ 1 % en poids à environ 100 % en poids des particules de charge (24).

8. Article abrasif (14) selon l'une quelconque des revendications 1 à 7, dans lequel environ 20 % à environ 100 % d'une surface de chaque particule de charge (24) de la partie du composant de particule de charge qui est au moins partiellement revêtue par la première couche métallique est revêtue par la première couche métallique.

9. Article abrasif (14) selon l'une quelconque des revendications 1 à 8, dans lequel la première couche métallique comprend un métal.

10. Article abrasif (14) selon la revendication 9, dans lequel le métal est du cuivre élémentaire, de l'étain élémentaire, de l'argent élémentaire, du bronze ou un alliage de ceux-ci.

11. Article abrasif (14) selon l'une quelconque des revendications 1 à 10, dans lequel le composant de particule abrasive comprend une pluralité de particules abrasives (22).

12. Article abrasif (14) selon la revendication 11, dans lequel les particules abrasives (22) sont au moins l'une parmi des particules de diamant ou des particules de nitrure de bore cubique.

13. Procédé de fabrication de l'article abrasif (14) selon l'une quelconque des revendications 1 à 12, comprenant :
le revêtement au moins partiel du composant de particule de charge avec la première couche métallique (26) à l'aide d'un revêtement par vapeur de plasma ;
le revêtement au moins partiel de la partie au moins partiellement revêtue du composant de particule de charge avec la seconde couche métallique, la seconde couche métallique comprenant le second métal différent du premier métal de la première couche métallique ;
le mélange du composant de particule de charge au moins partiellement revêtu, de la matrice métallique et d'une résine pour former un mélange, dans lequel l'épaisseur de la première couche métallique (26) du composant de particule de charge au moins partiellement revêtu est comprise entre environ 0,1 et environ 1 µm ;
l'ajout du composant de particule abrasive au mélange et le mélange à nouveau du mélange ; et
la mise en contact du mélange avec un moule.
